# EUROPEAN PATENT APPLICATION

(11) **EP 4 843 386 A1**
(43) Date of publication of application: **25.11.2026**
(21) Application number: 24935595.9
(22) Date of filing: 13.08.2024
(51) Int. Cl.: A01M 21/04, A01M 21/00, B25J 9/16, B25J 9/00, B25J 11/00, B25J 13/00

(54) **LASER WEEDING ROBOT AND OPERATION METHOD THEREFOR**

(30) Priority: 17.04.2024 CN 202410464253
(71) Applicant: Shanghai Allynav Technology Co., Ltd., Shanghai 201702 (CN)
(72) Inventor: LI, Xiaoyu, Shanghai 201702 (CN); SI, Jian, Shanghai 201702 (CN); WANG, Zheng, Shanghai 201702 (CN); ZHU, Hao, Shanghai 201702 (CN)
(74) Representative: ABG Intellectual Property Law, S.L.
(86) International application number: PCT/CN2024/111634
(87) International publication number: WO 2025/218063

(57) **Abstract**

A laser weeding robot and an operation method therefor. A robot body is a high-ground-clearance four-wheel independent steering movement platform, a laser light path is controlled by a laser galvanometer, a laser uses a CO2 laser having a wavelength of 10600 nm, and on the basis of Beidou satellite navigation, full-path automatic planning and full-automatic execution of movement from a robotic depot to a field and internal operation in a farmland can be achieved.

## Description

### FIELD OF THE INVENTION

This invention relates to the technical field of mechanical automation, specifically to a laser weeding robot and an operating method thereof.

### BACKGROUND

Modern weeding methods mainly include spraying chemicals and mechanical weeding. Spraying chemicals refers to spraying chemical agents in farmland, and killing weeds through the action of the agents. This method can improve weeding efficiency, but it also has impacts on the environment and ecology, because chemical agents may cause pollution to soil and water sources. In the long run, it may also cause weeds to develop resistance to the chemicals, thereby greatly reducing the weeding effect. Another modern weeding method is mechanical weeding, which is mainly carried out by means of rotating blades to remove weeds. This method can quickly and efficiently clear weeds in farmland, but it is likely to cause mechanical damage to crop seedlings.

Laser weeding, as a new environmentally friendly weeding method, has gradually attracted attention. Laser weeding utilizes a laser beam to directly irradiate weeds, and burns the leaves of the weeds through high temperature, thereby achieving the effect of weeding. This method does not require chemical agents, and does not produce noise or air pollution, and has relatively small impact on soil and water sources, thus having relatively high environmental friendliness and sustainability.

Existing laser weeding robots and their disadvantages:
The laser weeding robot disclosed in patent CN117652480A mainly controls the position of the laser and the direction of laser emission by means of a mechanical structure. However, the laser emitter in this solution is internally a glass laser tube, and frequent movement of the laser may easily cause damage to the laser tube. In addition, the speed and direction of the laser beam are not easy to precisely control, which seriously affects the normal use of the robot.

The laser weeding robot disclosed in patent CN220384097U adopts a tracked chassis. Since laser weeding robots are currently mainly used for high-value crops such as organic vegetables, the tracked structure has a large contact area with the ground, which will cause more crushing to crops and land, thereby affecting crop yield and subsequent land cultivation. In addition, this patent only supports remote-control driving and touch-screen operation driving, and the level of intelligence is very low, so it can only be regarded as a laser weeding machine.

The laser weeding robot disclosed in patent CN101589705A adopts a mechanically moving focusing lens to control the laser optical path. A significant shortcoming of this solution is that the control accuracy is low and the control speed is slow, making it impossible to improve the weeding efficiency.

### SUMMARY

To solve the above-mentioned technical problems, the present invention provides the following technical solution: a laser weeding robot and an operating method thereof.

A laser weeding robot, which comprises a robot body, a positioning device, a computing unit, an image acquisition component, and a laser emission and optical path control component;
wherein the robot body has a four-wheel, four-steering configuration comprising four motors for driving the robot and four motors for controlling steering, each motor being provided with an individual motor driver, and each motor being independently controllable, the robot body is provided with a mounting platform on which a battery is mounted, and the motor drivers are connected to the battery;
the positioning device comprises two GNSS antennas, a BeiDou satellite navigation receiver, an IMU, and a binocular camera, the two GNSS antennas are respectively installed at front and rear portions of the robot body, the IMU is installed on the mounting platform, and the binocular camera is installed at a front side of the robot body and is configured to dynamically adjust an operating path based on a crop arrangement extracted from crop rows, and the two GNSS antennas are respectively connected to the BeiDou satellite navigation receiver;
the computing unit is an embedded computer used for positioning calculation, driving control, image recognition, laser control, and network communication, the computing unit is connected to the battery, and the motor drivers, BeiDou satellite navigation receiver, IMU, and binocular camera are respectively connected to the computing unit;
the image acquisition component comprises a high-speed industrial camera installed below the mounting platform and connected to the computing unit; and
the laser emission and optical path control component comprises a laser, a galvanometer scanner, a F-theta lens, a laser driver board, and a galvanometer driver board, the F-theta lens is installed at a light output of the galvanometer scanner, the laser is connected to the laser driver board, the galvanometer scanner is connected to the galvanometer driver board, the laser driver board and the galvanometer driver board are respectively connected to the battery, and the laser driver board and the galvanometer driver board are respectively connected to the computing unit.

Preferably, the robot body has a telescopic structure in left-right, vertical, and front-rear directions.

Preferably, the robot further comprises a task dispatch platform, wherein the computing unit is connected to the task dispatch platform via a wireless network.

Preferably, the battery is provided with a battery management system.

Preferably, the positioning device further comprises a LiDAR installed above the mounting platform and connected to the computing unit.

Preferably, the two GNSS antennas are respectively connected to the BeiDou satellite navigation receiver via GNSS coaxial cables.

Preferably, a light-shielding cloth is installed around the robot body.

Preferably, the image acquisition component further comprises two LED auxiliary lights and an LED driver board, the two LED auxiliary lights are respectively installed on left and right sides of the high-speed industrial camera to assist in weed image acquisition, the two LED auxiliary lights are connected to the LED driver board, and the LED driver board is connected to the battery.

Preferably, the laser is a CO2 laser with a wavelength of 10600 nm.

A method for operating a laser weeding robot, wherein the laser weeding robot comprises any one of the laser weeding robots described in embodiments 3-9 above, the method comprising the following steps:
S1. manually adjusting telescopic structures of the robot body according to a row spacing and a crop height of crops in a farmland, and after the adjustment meets requirements of an operation task, powering on the robot so that the robot is in a ready state;
S2. transmitting, by the task dispatch platform, an operation task to the robot, and automatically planning, by the computing unit, an outbound path, an operating path, and a return path according to a farmland location in the task, and controlling the motor drivers according to the planned paths so as to control movement of the robot;
S3. moving and performing operations by the robot according to the planned operating path, while dynamically adjusting the operating path during the operation according to a crop arrangement extracted from crop rows by the binocular camera; and
S4. during the operation, automatically identifying weeds among crops by the computing unit according to image information provided by the high-speed industrial camera, rapidly calculating three-dimensional relative coordinates of the weeds, transmitting, by the computing unit, control instructions to the galvanometer driver board to control the galvanometer scanner to rotate toward directions corresponding to the weeds, and after the rotation is completed, transmitting control instructions to the laser driver board so that the laser emits laser beams to irradiate the weeds, wherein after the operation of an entire farmland is completed, the robot returns to a warehouse according to the return path, thereby completing a weeding operation.

A computer device comprises a memory and a processor, the memory storing a computer program, wherein the processor, when executing the computer program, performs the steps of the aforementioned method.

A computer-readable storage medium on which a computer program is stored, wherein the computer program, when executed by a processor, performs the steps of the aforementioned method.

The present invention proposes a laser weeding robot based on BeiDou satellite navigation, wherein the robot body is a high-clearance four-wheel four-steering traveling platform, the laser optical path is controlled by a galvanometer scanner, and the laser is a CO2 laser with a wavelength of 10600 nm.

Compared with the prior art, the beneficial effects achieved by the present invention are as follows:
1. Based on BeiDou satellite navigation, full-path automatic planning and fully automatic execution can be realized for traveling from the warehouse to the farmland and for operations inside the farmland, without additional manual operation.
2. A machine vision system is installed at the front of the robot. Based on the planting arrangement of crops, precise row-following traveling can be realized, and even if the sowing accuracy is low, the crops will not be damaged.
3. The robot body adopts a high-clearance four-wheel four-steering structure. The high clearance enables operations for crops of different heights and avoids damage to taller crops caused by the robot body being too close to the ground. The four-wheel four-steering structure can realize parallel movement in farmland. Combined with precise row following based on machine vision, zero damage to crops can be achieved.
4. The four-wheel four-steering structure of the robot body can realize telescopic changes in the front-rear, left-right, and up-down directions, so that users can meet the operation requirements for different crop row spacings and different crop heights.
5. The laser adopts a CO2 laser with a wavelength of 10600 nm. The laser in this frequency band belongs to the far-infrared band in the spectrum and is most easily absorbed in large quantities by organic tissues, thereby improving the energy efficiency of the laser action and further reducing operation energy consumption.
6. The optical path control of the laser is completed by a galvanometer scanner. During the weeding process, the laser remains fixed, thereby avoiding damage caused by moving the laser. The galvanometer scanner can quickly and precisely control the laser optical path, reducing additional costs caused by laser damage, and the high-precision control of the galvanometer scanner can reduce accidental damage to main crops.
7. A flat-field focusing lens (F-theta lens) is configured at the light output of the galvanometer scanner. After the laser passes through the lens, a focused spot with uniform size is formed, thereby solving the problem of off-axis deflection of the laser beam, making the laser energy more concentrated, improving the operation effect, and reducing energy consumption.
8. A high-speed industrial camera is installed below the mounting platform of the robot body. The included angle between the axial direction of the camera lens and the robot body can be preset according to the height of weeds, so as to realize rapid identification of weeds with different heights.
9. Two high-brightness LED auxiliary lights are respectively installed on the left and right sides of the industrial camera to assist the industrial camera in acquiring high-definition images of crops and weeds.
10. An opaque light-shielding cloth is arranged around the robot body to prevent possible injury to the human body caused by reflected laser beams.
11. In the present invention, weeds are irradiated with high-intensity, high-density, and high-energy laser within a short time, so that the weeds are heated and shrunk, thereby killing the weeds. The whole weeding process is efficient, rapid, and pollution-free. The dead weeds remaining in the farmland can serve as fertilizer to provide value for crops. A large amount of manual labor is saved, the health of farmers is protected, and the use of pesticides is reduced while protecting the environment.

### BRIEF DESCRIPTION OF THE DRAWINGS

The accompanying drawings are provided for further understanding of the present invention and constitute a part of the specification. Together with the embodiments of the present invention, they are used to explain the present invention and do not constitute a limitation to the present invention. In the drawings:
FIG. 1 is a schematic structural diagram of the robot body according to an embodiment of the present invention;
FIG. 2 is a schematic diagram showing front-rear, left-right, and up-down adjustability of the four-wheel four-steering structure of the robot body according to an embodiment of the present invention;
FIG. 3 is a schematic diagram of a system connection mode according to an embodiment of the present invention;
FIG. 4 is a schematic diagram of visual row following according to an embodiment of the present invention;
FIG. 5 is a schematic diagram of global automatic operation path planning according to an embodiment of the present invention.

Wherein: 1, GNSS antenna; 2, LiDAR; 3, binocular camera; 4, left-right telescopic structure; 5, up-down telescopic structure; 6, front-rear telescopic structure; 7, driving motor; 8, steering motor.

### DESCRIPTION OF PREFERRED EMBODIMENTS

The technical solutions in the embodiments of the present invention will be clearly and completely described below with reference to the accompanying drawings in the embodiments of the present invention. Obviously, the described embodiments are only a part of the embodiments of the present invention rather than all of the embodiments. Based on the embodiments of the present invention, all other embodiments obtained by those of ordinary skill in the art without making creative efforts shall fall within the protection scope of the present invention.

This embodiment provides a laser weeding robot.

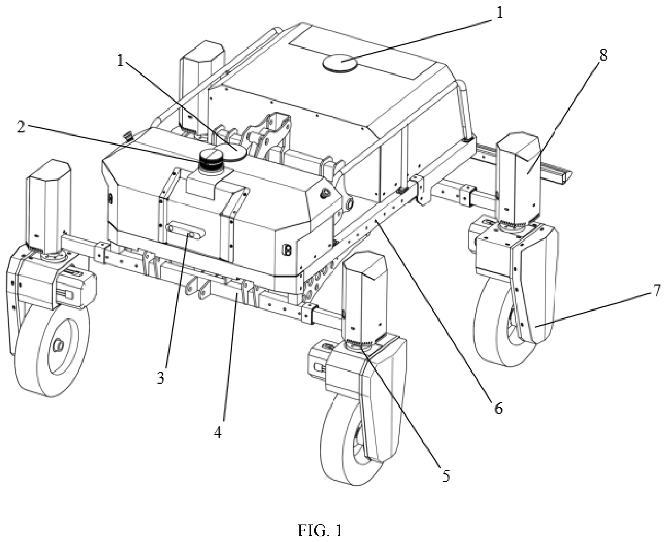

The laser weeding robot comprises a robot body, a positioning device, a computing unit, an image acquisition component, and a laser emission and optical path control component (as shown in FIG. 1).

The robot body has a four-wheel four-steering configuration, comprising four motors (driving motors 7) for controlling driving and four motors (steering motors 8) for controlling steering. Each motor is provided with an individual motor driver, and the operation of each motor can be independently controlled.

The robot body is provided with a mounting platform on which a battery, a battery management system, and motor drivers are installed (as shown in FIG. 1).

The motors are connected to the motor drivers, and the motor drivers are connected to the battery.

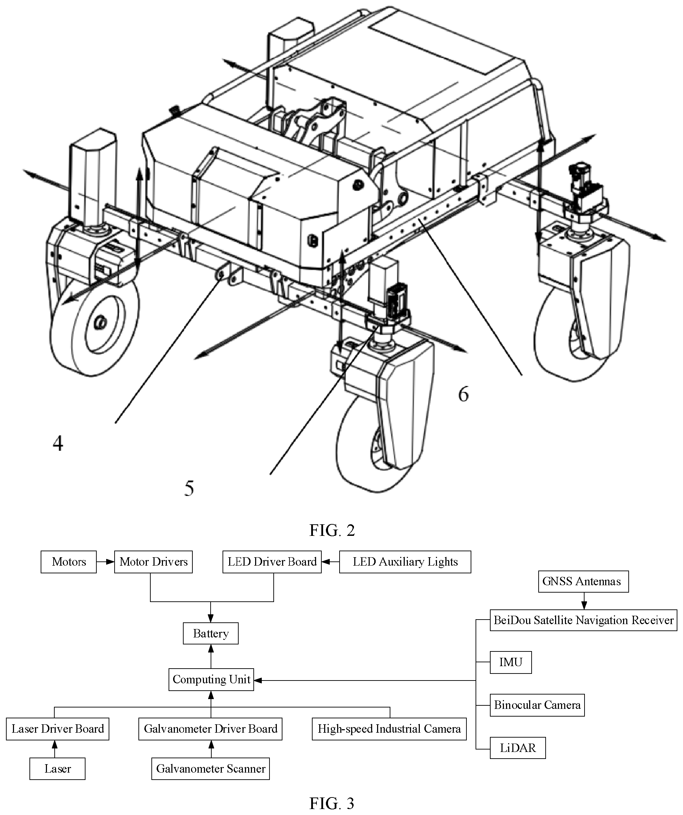

The left-right, up-down, and front-rear directions of the robot body are all designed as telescopic structures, specifically comprising: a left-right telescopic structure 4; an up-down telescopic structure 5; and a front-rear telescopic structure 6, which are used to meet operation requirements for different crop row spacings and different crop heights (as shown in FIG. 2).

A light-shielding cloth is installed around the robot body to prevent possible injury to the human body caused by reflected laser beams.

The positioning device comprises two GNSS antennas 1, a BeiDou satellite navigation receiver, an IMU, a binocular camera 3, and an optional LiDAR 2. The two GNSS antennas are respectively installed at front and rear portions of the robot body, the IMU is installed at any position on the mounting platform of the robot, the binocular camera is installed directly in front of the traveling direction of the robot, and the LiDAR is installed above the mounting platform (as shown in FIG. 1).

The two GNSS antennas are respectively connected to the BeiDou satellite navigation receiver via GNSS coaxial cables.

The computing unit is an embedded computer used for positioning calculation, driving control, image recognition, laser control, and network communication. The connection mode between the computing unit and other components is shown in FIG. 3. The computing unit is connected to the battery installed on the mounting platform. The computing unit is connected to the task dispatch platform via a wireless network.

The BeiDou satellite navigation receiver, the IMU, the binocular camera, and the LiDAR are respectively connected to the computing unit.

The image acquisition component comprises a high-speed industrial camera, two LED auxiliary lights, and an LED driver board.

The high-speed industrial camera is connected to the computing unit, the LED auxiliary lights are connected to the LED driver board, and the LED driver board is connected to the battery installed on the mounting platform.

The high-speed industrial camera is installed below the mounting platform. By adjusting mounting structural components, the included angle between the axial direction of the camera lens and the robot body can be adjusted, thereby enabling recognition of weeds at different heights.

The two LED auxiliary lights are respectively installed on the left and right sides of the high-speed industrial camera to assist weed image acquisition.

The laser emission and optical path control component comprises a laser, a galvanometer scanner, a F-theta lens, a laser driver board, and a galvanometer driver board.

The laser is a CO2 laser with a wavelength of 10600 nm.

The galvanometer scanner and the laser can be installed in combination.

The F-theta lens is installed at the light output of the galvanometer scanner.

The laser is connected to the laser driver board, the galvanometer scanner is connected to the galvanometer driver board, and the laser driver board and the galvanometer driver board are respectively connected to the battery installed on the mounting platform. The laser driver board and the galvanometer driver board are respectively connected to the computing unit.

### Operation process:

First, the telescopic structures of the robot body are manually adjusted according to the row spacing of crops in the farmland and the crop height. After the adjustment meets the requirements of the operation task, the robot power is turned on so that the robot is in a ready state.

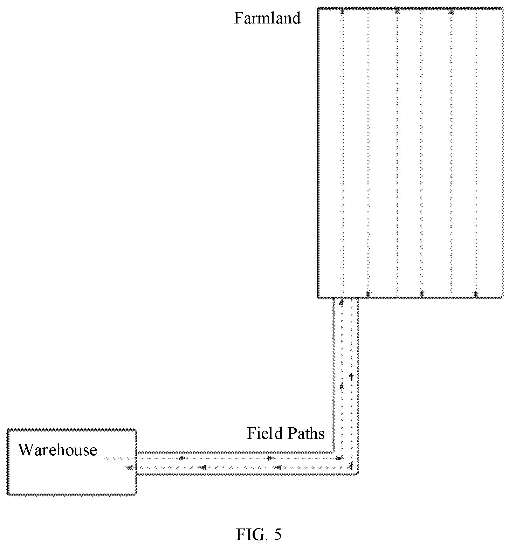

After receiving an operation task transmitted by the task dispatch platform, the weeding robot parked in the warehouse automatically plans, by the computing unit, an outbound path, an operating path, and a return path according to the farmland location in the task (as shown in FIG. 5), and controls the motor drivers according to the planned paths so as to control movement of the robot. If the warehouse is a non-open warehouse, the robot calculates its own position based on the LiDAR in the warehouse, and after leaving the warehouse, the robot automatically moves according to the position provided by the BeiDou satellite navigation receiver. If the warehouse is an open warehouse, the robot position is continuously provided by the BeiDou satellite navigation receiver.

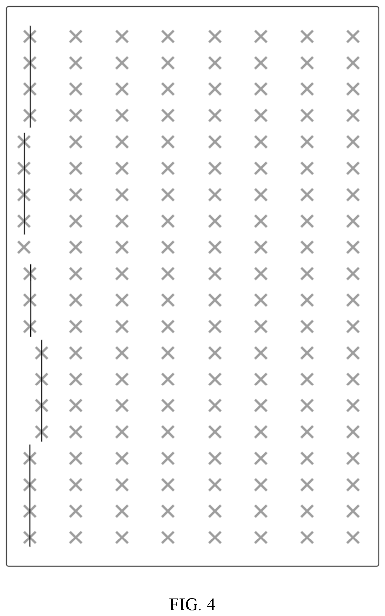

After arriving at the farmland, the robot moves and performs operations according to the planned operating path, and during the operation dynamically adjusts the operating path according to a crop arrangement extracted from crop rows by the binocular camera (as shown in FIG. 4), thereby avoiding crushing crops.

During the operation, the computing unit automatically identifies weeds among crops according to image information provided by the high-speed industrial camera, and rapidly calculates three-dimensional relative coordinates of the weeds. At the same time, the computing unit transmits control instructions to the galvanometer driver board to control the galvanometer scanner to rotate toward directions corresponding to the weeds. After the rotation is completed, the computing unit transmits control instructions to the laser driver board so that the laser emits laser beams to irradiate the weeds. After the operation of the entire farmland is completed, the robot returns to the warehouse according to the return path, thereby completing a complete weeding operation. After the task is transmitted, the entire process operates automatically without remote control or manual intervention.

It should be noted that, in this document, relational terms such as first and second are used merely to distinguish one entity or operation from another entity or operation, and do not necessarily require or imply any actual relationship or order between such entities or operations. Moreover, the terms "include", "comprise", or any other variations thereof are intended to cover a non-exclusive inclusion, such that a process, method, article, or device that includes a series of elements not only includes those elements but may also include other elements not explicitly listed, or may further include elements inherent to such process, method, article, or device.

Finally, it should be noted that the above descriptions are only preferred embodiments of the present invention and are not intended to limit the present invention. Although the present invention has been described in detail with reference to the foregoing embodiments, those skilled in the art may still make modifications to the technical solutions described in the foregoing embodiments, or make equivalent substitutions for some of the technical features therein. Any modifications, equivalent substitutions, improvements, and the like made within the spirit and principle of the present invention shall fall within the protection scope of the present invention.

## Claims

1. A laser weeding robot, **characterized in that** it comprises a robot body, a positioning device, a computing unit, an image acquisition component, and a laser emission and optical path control component;
wherein the robot body has a four-wheel, four-steering configuration comprising four motors for driving the robot and four motors for controlling steering, each motor being provided with an individual motor driver, and each motor being independently controllable, the robot body is provided with a mounting platform on which a battery is mounted, and the motor drivers are connected to the battery;
the positioning device comprises two GNSS antennas, a BeiDou satellite navigation receiver, an IMU, and a binocular camera, the two GNSS antennas are respectively installed at front and rear portions of the robot body, the IMU is installed on the mounting platform, and the binocular camera is installed at a front side of the robot body and is configured to dynamically adjust an operating path based on a crop arrangement extracted from crop rows, and the two GNSS antennas are respectively connected to the BeiDou satellite navigation receiver;
the computing unit is an embedded computer used for positioning calculation, driving control, image recognition, laser control, and network communication, the computing unit is connected to the battery, and the motor drivers, BeiDou satellite navigation receiver, IMU, and binocular camera are respectively connected to the computing unit;
the image acquisition component comprises a high-speed industrial camera installed below the mounting platform and connected to the computing unit; and
the laser emission and optical path control component comprises a laser, a galvanometer scanner, a F-theta lens, a laser driver board, and a galvanometer driver board, the F-theta lens is installed at a light output of the galvanometer scanner, the laser is connected to the laser driver board, the galvanometer scanner is connected to the galvanometer driver board, the laser driver board and the galvanometer driver board are respectively connected to the battery, and the laser driver board and the galvanometer driver board are respectively connected to the computing unit.

2. The laser weeding robot according to claim 1, **characterized in that** the robot body has a telescopic structure in left-right, vertical, and front-rear directions.

3. The laser weeding robot according to claim 2, **characterized in that** it further comprises a task dispatch platform, wherein the computing unit is connected to the task dispatch platform via a wireless network.

4. The laser weeding robot according to claim 3, **characterized in that** the battery is provided with a battery management system.

5. The laser weeding robot according to claim 3, wherein the positioning device further comprises a LiDAR installed above the mounting platform and connected to the computing unit.

6. The laser weeding robot according to claim 3, wherein the two GNSS antennas are respectively connected to the BeiDou satellite navigation receiver via GNSS coaxial cables.

7. The laser weeding robot according to claim 3, **characterized in that** a light-shielding cloth is installed around the robot body.

8. The laser weeding robot according to claim 3, **characterized in that** the image acquisition component further comprises two LED auxiliary lights and an LED driver board, the two LED auxiliary lights are respectively installed on left and right sides of the high-speed industrial camera to assist in weed image acquisition, the two LED auxiliary lights are connected to the LED driver board, and the LED driver board is connected to the battery.

9. The laser weeding robot according to claim 3, wherein the laser is a CO2 laser with a wavelength of 10600 nm.

10. A method for operating a laser weeding robot, **characterized in that** the laser weeding robot is the laser weeding robot according to any one of claims 3-9, the method comprising the following steps:
S1. manually adjusting telescopic structures of the robot body according to a row spacing and a crop height of crops in a farmland, and after the adjustment meets requirements of an operation task, powering on the robot so that the robot is in a ready state;
S2. transmitting, by the task dispatch platform, an operation task to the robot, and automatically planning, by the computing unit, an outbound path, an operating path, and a return path according to a farmland location in the task, and controlling the motor drivers according to the planned paths so as to control movement of the robot;
S3. moving and performing operations by the robot according to the planned operating path, while dynamically adjusting the operating path during the operation according to a crop arrangement extracted from crop rows by the binocular camera; and
S4. during the operation, automatically identifying weeds among crops by the computing unit according to image information provided by the high-speed industrial camera, rapidly calculating three-dimensional relative coordinates of the weeds, transmitting, by the computing unit, control instructions to the galvanometer driver board to control the galvanometer scanner to rotate toward directions corresponding to the weeds, and after the rotation is completed, transmitting control instructions to the laser driver board so that the laser emits laser beams to irradiate the weeds, wherein after the operation of an entire farmland is completed, the robot returns to a warehouse according to the return path, thereby completing a weeding operation.

11. A computer device, comprising a memory and a processor, the memory storing a computer program, **characterized in that** the processor, when executing the computer program, performs the steps of the method according to claim 10.

12. A computer-readable storage medium on which a computer program is stored, **characterized in that** the computer program, when executed by a processor, performs the steps of the method according to claim 10.
